# DEMANDE DE BREVET EUROPEEN

(11) **EP 1 044 840 A1**
(43) Date de publication de la demande: **18.10.2000**
(21) Numéro de dépôt: 00400913.0
(22) Date de dépôt: 03.04.2000
(51) Int. Cl.: B60J 10/00

(54) **Feuillard comportant une face cannelée, notamment pour la réalisation d'armatures pour profilés en plastomère ou élastomère**

(30) Priorité: 13.04.1999 FR 9904594
(71) Demandeur: BTR SEALING SYSTEMS FRANCE, 92000 Nanterre (FR)
(72) Inventeur: Dron, Bernard, 92800 Puteaux (FR)
(74) Mandataire: Jolly, Jean-Pierre

(57) **Abrégé**

Ce feuillard comprend une première feuille (1) sensiblement plane en un matériau rigide et une seconde feuille (2) à profil cannelé en le même matériau ou en un matériau rigide différent, appliquée contre la première feuille et soudée ou collée contre celle-ci.

## Description

La présente invention concerne un feuillard comportant une face cannelée, notamment pour la réalisation d'armatures pour profilés en plastomère ou élastomère.

De tels profilés en une matière souple, déformable élastiquement, sont utilisés notamment dans l'industrie automobile comme organes d'étanchéité de portes, de vitres ou de coffre, et ils comportent habituellement une partie à section en U, destinée à coiffer et pincer un bord saillant de la carrosserie du véhicule pour en être rendue solidaire. La plupart du temps, cette partie à section en U comporte une armature rigide, de profil analogue en U, généralement métallique, gainée au moins partiellement de l'élastomère ou du plastomère constituant le profilé. Cette armature rigidifie le profilé et lui permet de pincer fermement l'élément de carrosserie qu'il est destiné à équiper.

L'armature est généralement découpée et ajourée, en vue, d'une part, de l'alléger, mais surtout de lui conférer les propriétés de résistance mécanique désirées et de lui permettre d'épouser fidèlement, en particulier dans les angles, la forme de la partie de carrosserie qu'équipe le profilé, par exemple un encadrement de porte ou un encadrement de vitre, coulissante ou non.

Dans la pratique, l'armature est découpée dans un feuillard métallique, mise en forme et ensuite gainée par extrusion de la matière thermoplastique ou thermodurcissable constituant le profilé.

D'innombrables formes de telles armatures ont été proposées dans la technique, et l'on pourra se référer par exemple au brevet U.S. N° 3 165 793, qui en décrit de nombreuses variétés. Ces armatures comportent habituellement une bande longitudinale, continue ou discontinue, disposée suivant la partie médiane de la base de la section en U, et des ailes latérales attenantes à cette bande longitudinale et parallèles entre elles, disposées suivant les branches du U, ces branches pouvant être raccordées entre elles à intervalles réguliers par des entretoises, parallèles à la base du U ou disposées en oblique par rapport à celles-ci. Suivant leurs formes, certaines de ces armatures sont dites en arête de poisson, ou désignées dans la technique par d'autres expressions imagées.

La présente invention vise à accroître la rigidité de telles armatures en modifiant localement leur épaisseur, sans majorer leurs poids.

A cet effet, l'invention a pour premier objet un feuillard, notamment pour la réalisation d'armatures pour profilés en élastomère ou plastomère, caractérisé en ce qu'il comprend une première feuille sensiblement plane en un matériau rigide et une seconde feuille à profil cannelé en le même matériau ou en un matériau rigide différent, appliquée contre la première feuille et soudée ou collée contre celle-ci.

Les deux feuilles peuvent être métalliques ou en une matière plastique suffisamment rigide et elles peuvent être assemblées, notamment, par collage ou soudage par points, à la molette ou au laser.

Chaque feuille peut avoir une épaisseur de l'ordre de 0,10 à 0,20 mm, ce qui, compte tenu de la forme cannelée de l'une d'entre elles, conduit à un feuillard ayant une épaisseur globale cumulée (épaisseur "fictive") de 0,50 à 0,60 mm.

Ce feuillard à double épaisseur présente une rigidité sensiblement accrue, tout en étant beaucoup plus léger que ne le serait un feuillard cannelé d'épaisseur simple, présentant la même rigidité. On notera que l'une de ses faces est plane et continue.

Naturellement, la feuille à profil cannelé peut être collée ou soudée contre une troisième feuille, sensiblement plane, disposée parallèlement à la première feuille plane. Dans le feuillard résultant, la feuille à profil cannelé est donc pincée entre les deux feuilles plane et ce feuillard présente donc une rigidité et des caractéristiques mécaniques considérablement accrues.

L'invention a également pour objet les armatures à section en U pour profilés en plastomère ou en élastomère, obtenues par découpe d'un feuillard du type défini ci-dessus et mise en forme de la partie découpée, avec la partie cannelée tournée vers l'intérieur du U.

Dans une telle armature, les cannelures peuvent être disposées longitudinalement, c'est-à-dire parallèlement à la base du U, ou transversalement, c'est-à-dire dans des plans perpendiculaires à cette base, en fonction de l'accroissement de rigidité recherché.

L'invention a enfin pour objet des profilés en élastomère ou plastomère, notamment pour véhicules automobiles, dont une partie au moins, notamment une partie formant pince à section en U, comporte une armature du type défini ci-dessus.

Les caractéristiques et avantages de l'invention ressortiront mieux de la description détaillée qui va suivre, dans laquelle on se réfèrera aux dessins schématiques annexés. Sur ces dessins :
La figure 1 est une vue en élévation latérale d'un feuillard conforme à l'invention, dans la direction des cannelures qu'il comporte ;
La figure 2 est une vue de détail à plus grande échelle de ce feuillard ;
La figuré 3 est une vue en perspective avec arrachement d'un profilé en élastomère ou plastomère, comportant une armature à section en U réalisée à partir du feuillard de la figure 1, avec les cannelures disposées dans des plans perpendiculaires à la base du U ;
La figure 4 est une vue de détail à plus grande échelle de la figure 3 ;
La figure 5 est une vue en perspective avec arrachement d'un autre profilé en élastomère ou plastomère, comportant une armature à section en U réalisée à partir du feuillard de la figure 1, avec les cannelures disposées parallèlement à la base du U.

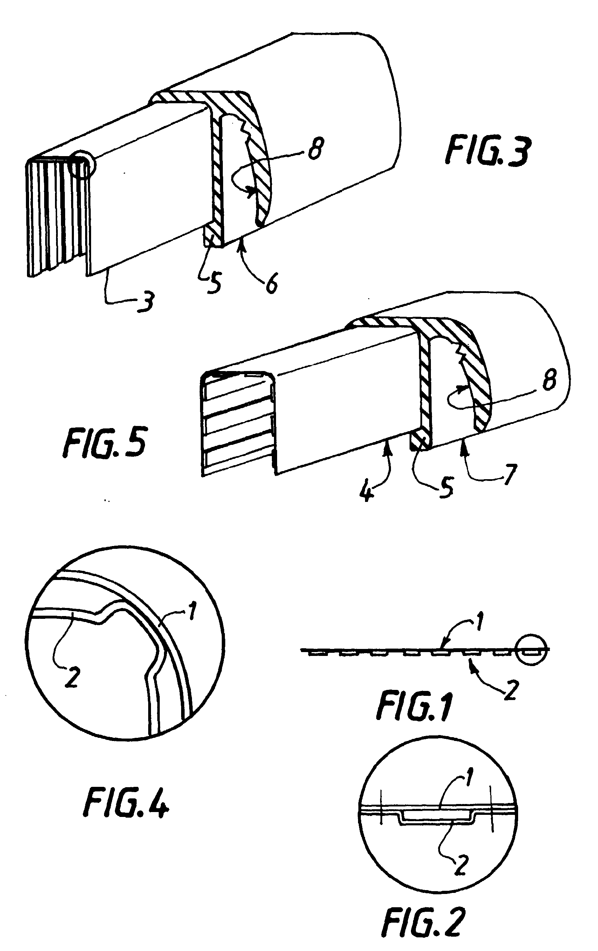

Comme on le voit sur les figures 1 et 2, dans cette forme de réalisation, le feuillard conforme à l'invention comprend deux feuilles métalliques, l'une, 1, plane, l'autre, 2, à profil cannelé, assemblées entre elles par collage ou soudage par points. Les feuilles 1 et 2 peuvent être en aluminium, en acier ou en tout autre métal approprié à la rigidité désirée, qui est sensiblement accrue, du fait des cannelures, perpendiculairement à celles-ci.

Chaque feuille peut avoir une épaisseur appropriée à l'usage du feuillard conforme à l'invention, mais, dans le cas de la réalisation d'armatures métalliques pour profilés en élastomère ou en plastomère, notamment pour véhicules automobiles, du type représenté sur les figures 3 et 5, chacune des feuilles 1 et 2 aura avantageusement une épaisseur d'environ 0,10 à 0,20 mm, l'épaisseur globale du feuillard ou épaisseur fictive étant alors de 0,50 à 0,60 mm du fait des surépaisseurs dues aux cannelures.

Comme représenté sur les figures 3, 4 et 5, il est possible de réaliser à partir d'un tel feuillard des armatures à section en U, respectivement 3 et 4, partiellement ou totalement gainées d'un élastomère ou d'un plastomère 5, pour former un profilé, respectivement 6 et 7, ayant lui-même une section en U et destiné à coiffer et à pincer un bord saillant d'encadrement de porte, de coffre, ou de vitre, coulissante ou non, d'un véhicule automobile. Dans l'exemple représenté, ce profilé comprend une lèvre 8 d'étanchéité et/ou décorative, mais il pourrait naturellement être de tout autre type.

Comme on le voit sur les dessins, la feuille 2 présentant les cannelures est disposée à l'intérieur de l'armature, tandis que la feuille 1 non cannelée est disposée vers l'extérieur, de manière à conférer à la surface externe du profil 5 ou 6 gainant cette armature un aspect lisse et continu, agréable au regard.

Suivant la direction de l'accroissement de rigidité recherché, longitudinalement ou transversalement, les cannelures de l'armature peuvent être perpendiculaires à la base du U de la section de cette armature, comme représenté sur la figure 1, ou parallèles à cette base, comme représenté sur la figure 2. Dans les deux cas, les feuilles 1 et 2 seront avantageusement en contact et assemblées par collage ou soudage au niveau des lignes de raccordement de la base et des branches du U (voir la vue à plus grande échelle de la figure 4).

La face externe de la partie formant pince des profilés comportant une telle armature est parfaitement lisse et de bel aspect, car elle ne présente pas les défauts dits "en côtes de cheval" des profilés comportant certaines armatures de la technique antérieure.

Ces parties formant pinces présentent en outre une rigidité accrue dans le sens désiré et la présence de l'armature conforme à l'invention n'entraîne aucune majoration du poids des profilés ainsi réalisés.

## Revendications

1. Feuillard, notamment pour la réalisation d'armatures pour profilés en élastomère ou plastomère, caractérisé en ce qu'il comprend une première feuille (1) sensiblement plane en un matériau rigide et une seconde feuille (2) à profil cannelé en le même matériau ou en un matériau rigide différent, appliquée contre la première feuille et soudée ou collée contre celle-ci.

2. Feuillard selon la revendication 1, caractérisé en ce que l'épaisseur de chacune des feuilles (1, 2) est de l'ordre de 0,10 à 0,20 mm et en ce que l'épaisseur fictive cumulée des deux feuillards est de l'ordre de 0,50 à 0,60 mm.

3. Feuillard selon l'une des revendications 1 et 2, caractérisé en ce que les feuilles (1, 2) sont en métal.

4. Feuillard selon l'une des revendications 1 à 3, caractérisé en ce que la feuille à profil cannelé (2) est collée ou soudée contre une troisième feuille, sensiblement plane, disposée parallèlement à la première feuille plane (1).

5. Armature à section en U, éventuellement ajourée, pour profilé en élastomère ou en plastomère, obtenue par découpe d'un feuillard selon l'une des revendications 1 à 4 et conformage en U, la feuille cannelée (2) étant disposée à l'intérieur du U.

6. Armature selon la revendication 5, caractérisée en ce que les cannelures de la feuille (2) sont parallèles à la base de la section en U.

7. Armature selon la revendication 5, caractérisée en ce que les cannelures de la feuille (2) sont disposées dans des plans perpendiculaires à la base de la section en U.

8. Profilé en élastomère ou plastomère, notamment pour véhicules automobiles, comportant une armature selon l'une des revendications 1 à 7.

9. Profilé selon la revendication 7, comportant une partie à section en U (5, 6) formant pince, destinée à pincer et serrer un bord saillant d'une partie de carrosserie d'automobile, caractérisé en ce que la partie formant pince (5, 6) comporte une armature selon l'une des revendications 1 à 7.
